# EUROPEAN PATENT APPLICATION

(11) **EP 4 512 570 A1**
(43) Date of publication of application: **26.02.2025**
(21) Application number: 24195451.0
(22) Date of filing: 20.08.2024
(51) Int. Cl.: B23K 31/12, B23K 26/03, B23K 26/24

(54) **METHOD OF DETECTING POOR WELDING IN WELDING AND RELATED DEVICE**

(30) Priority: 24.08.2023 CN 202311076857
(71) Applicant: Guangzhou Diligine Photonics Co., Ltd., Guangzhou, Guangdong 510220 (CN)
(72) Inventor: YANG, Jianbiao, Guangzhou, 510220 (CN); WANG, Lin, Guangzhou, 510220 (CN); YOU, Deyong, Guangzhou, 510220 (CN)
(74) Representative: Ipside

(57) **Abstract**

The present disclosure relates to the field of laser machining. A method for detecting poor welding in welding and a related device are provided in embodiments of the present disclosure. The method includes the following. An industrial personal computer (IPC) obtains an electrical signal corresponding to an infrared light signal generated by a target weld in a first period. A start moment of the first period is not earlier than a moment at which the complete target weld is formed. The IPC determines whether the target weld has poor welding according to the electrical signal corresponding to the infrared light signal. In the embodiments of the present disclosure, it is possible to detect whether a weld formed in a sheet welding process has poor welding.

## Description

### TECHNICAL FIELD

This disclosure relates to the field of laser machining technology, and in particular to a method for detecting poor welding in welding and a related device.

### BACKGROUND

In fields of computer, communication and consumer electronics (3C), metal-sheet laser welding is a main way to connect positive and negative materials of button batteries, mobile phone batteries, notebook batteries, etc. In order to ensure welding quality, results of the laser welding need to be analyzed and checked, and analyses of welds include identifying welding defects.

Identification of laser welding defects in the 3C field is a great challenge. At present, it is usually impossible to identify whether a weld has poor welding when the weld is simply and visually inspected by means of a top view. If an electrode material has poor welding, continuous and stable electrical contact of a battery during operation cannot be ensured, which is a big problem. Therefore, it is very important to detect poor welding in a sheet laser welding process.

### SUMMARY

A method for detecting poor welding in welding and a related device are provided. By means of embodiments of the present disclosure, whether a weld generated in a sheet welding process has poor welding is determined.

The following technical solution is adopted to implement the present disclosure.

In a first aspect, a method for detecting poor welding in welding is provided in embodiments of the present disclosure. The method includes the following. An industrial personal computer (IPC) obtains an electrical signal corresponding to an infrared light signal generated by a target weld in a first period. A start moment of the first period is not earlier than a moment at which the complete target weld is formed. The IPC determines whether the target weld has poor welding according to the electrical signal corresponding to the infrared light signal. The target weld is formed by laser machining a sheet material.

Further, the IPC is further configured to display the electrical signal corresponding to the infrared light signal generated by the target weld in the first period.

The sheet material refers to a material whose thickness is less than a preset thickness. In an example, the sheet material refers to a material whose thickness is less than 0.5 mm.

After the welding to the sheet material is completed, an energy of an infrared light radiated by a weld having poor welding is different from an energy of an infrared light radiated by a weld having no poor welding, so that whether the weld has poor welding can be determined by detecting the infrared light signal radiated by the weld after the welding is completed.

The average offset of the infrared light signal may be regarded as an offset of the electrical signal corresponding to the infrared light signal with respect to the base midline of the infrared light signal.

The preset offset range is determined according to the average value and the standard deviation of the average offsets of the electrical signals corresponding to the infrared light signals generated in the second period by the multiple complete welds having no poor welding obtained in the historical laser machining process, and then whether the poor welding exists is determined by means of preset offset range, so that an accurate determination result can be obtained.

After the complete welds are formed, the energy of the infrared light generated by the weld having the poor welding is higher than the energy of the infrared light generated by the weld having no poor welding. Accordingly, the upper limit-value of the infrared light signal generated by the weld having the poor welding is greater than the upper limit-value of the infrared light signal generated by the weld having no poor welding. Therefore, after the complete target weld is formed, by comparing the upper limit-value of the infrared light signal generated by the target weld with the upper limit-threshold, it is determined whether the energy of the infrared light generated by the target weld is higher than the energy of the infrared light generated by the weld having no poor welding, so as to determine whether the target weld has poor welding. In addition, the determination result obtained by this determination method has high accuracy.

After the complete welds are formed, the energy of the infrared light generated by the weld having the poor welding is higher than the energy of the infrared light generated by the weld having no poor welding. Accordingly, the upper local-area of the infrared light signal generated by the weld having the poor welding is larger than the upper local-area of the infrared light signal generated by the weld having no poor welding. Therefore, after the complete target weld is formed, by comparing the upper local-area of the infrared light signal generated by the target weld with the upper local-area threshold, it is determined whether the energy of the infrared light generated by the target weld is higher than the energy of the infrared light generated by the weld having no poor welding, so as to determine whether the target weld has poor welding. In addition, the determination result obtained by this determination method has high accuracy.

After the complete welds are formed, the energy of the infrared light generated by the weld having the poor welding is higher than the energy of the infrared light generated by the weld having no poor welding. Accordingly, an average value of the slope of the infrared light signal generated by the weld having the poor welding is greater than an average value of the slope of the infrared light signal generated by the weld having no poor welding. Therefore, after the complete target weld is formed, by comparing the average value of the slope of the infrared light signal generated by the target weld with the slope threshold, it is determined whether the energy of the infrared light generated by the target weld is higher than the energy of the infrared light generated by the weld having no poor welding, so as to determine whether the target weld has poor welding. In addition, the determination result obtained by this determination method has high accuracy.

After the complete welds are formed, the energy of the infrared light generated by the weld having the poor welding is higher than the energy of the infrared light generated by the weld having no poor welding. Accordingly, the amplitude average-value of the infrared light signal generated by the weld having the poor welding is larger than the amplitude average-value of the infrared light signal generated by the weld having no poor welding. Therefore, after the complete target weld is formed, by comparing the amplitude average-value of the infrared light signal generated by the target weld with the average-value threshold, it is determined whether the energy of the infrared light generated by the target weld is higher than the energy of the infrared light generated by the weld having no poor welding, so as to determine whether the target weld has poor welding. In addition, the determination result obtained by this determination method has high accuracy.

When the target weld is determined to have the poor welding, the laser welding system re-machines the target weld, which helps to reduce occurrence of poor welding in the target weld, thereby ensuring quality of the target weld.

By displaying the graph of the electrical signal curve corresponding to the infrared light signal generated by the target weld after the complete target weld is formed, and displaying the result of whether the target weld has the poor welding, the machining personnel can know the machining quality in the machining process.

In a second aspect, an IPC is provided in embodiments of the present disclosure. The IPC includes an obtaining unit, a determining unit, a transceiver unit, and a display unit. The obtaining unit, the determining unit, the transceiver unit, and a display unit are configured to implement the method provided in any one of the first aspect.

In a third aspect, an IPC is provided in embodiments of the present disclosure. The IPC includes a processor. The processor is connected to a memory. The memory is configured to store computer programs. The processor is configured to execute the computer programs stored in the memory to cause the IPC to perform the method in the first aspect.

In a fourth aspect, a laser machining control system is provided in embodiments of the present disclosure. The laser machining control system includes a laser welding system, a multi-optical sensor module, a signal processing module, and an IPC. The IPC is configured to perform the method in the first aspect.

In a fifth aspect, a computer-readable storage medium is provided in embodiments of the present disclosure. The computer-readable storage medium is configured to store computer programs. The computer programs cause a computer to perform the method in the first aspect.

In a sixth aspect, a computer program product is provided in embodiments of the present disclosure. The computer program product includes a non-transitory computer-readable storage medium storing computer programs. A computer is operable to cause the computer to perform the method in the first aspect.

It can be understood that each of the IPC in the second aspect and the third aspect, the laser machining control system in the fourth aspect, the computer-readable storage medium in the fifth aspect, and the computer program product in the sixth aspect is used for implementing the method in the first aspect. Therefore, for beneficial effects that can be realized, refer to beneficial effects in a corresponding method, and details are not described herein again.

### BRIEF DESCRIPTION OF THE DRAWINGS

To explain technical solutions in embodiments of the present disclosure or in the related art more clearly, the following will give a brief introduction to the accompanying drawings which are needed to be used in embodiments of the present disclosure. Apparently, the accompanying drawings in the following description are only some embodiments of the present disclosure. For those of ordinary skill in the art, other accompanying drawings can be obtained according to these accompanying drawings without creative efforts.
FIG. 1 is a schematic diagram of a framework of a system for detecting poor welding in laser welding provided in an embodiment of the present disclosure.
FIG. 2 is a schematic flowchart of a method for detecting poor welding in welding provided in an embodiment of the present disclosure.
FIG. 3a is a sequence diagram of post-welding detection.
FIG. 3b is a schematic diagram of a welding process.
FIG. 4a is a schematic diagram of a calculation result of an average offset provided in an embodiment of the present disclosure.
FIG. 4b is a schematic diagram of an upper local-area of an infrared light signal provided in an embodiment of the present disclosure.
FIG. 4c is a schematic diagram of a slope of an infrared light signal provided in an embodiment of the present disclosure.
FIG. 4d is a schematic diagram of a detection result provided in an embodiment of the present disclosure.
FIG. 5 is a schematic structural diagram of an industrial personal computer (IPC) provided in an embodiment of the present disclosure.
FIG. 6 is a schematic structural diagram of an IPC provided in another embodiment of the present disclosure.

### DETAILED DESCRIPTION

Technical solutions in embodiments of the present disclosure will be described clearly and completely with reference to accompanying drawings in the embodiments of the present disclosure. Apparently, embodiments hereinafter described are merely some embodiments, rather than all implementations, of the present disclosure. All other embodiments obtained by those of ordinary skill in the art based on the embodiments herein without creative efforts shall fall within the protection scope of the present disclosure.

The terms used in embodiments of the present disclosure are merely intended for describing the embodiments, rather than limiting the present disclosure. The singular form "a/an", "said", "above", and "the" used in embodiments, brief description of the accompanying drawings, and the appended claims of the present disclosure are also intended to include multiple forms, unless specified otherwise in the context. It may be understood that, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship. It may be understood that although terms such as "first", "second", and the like may be used in embodiments of the present disclosure, they do not indicate any order, quantity, or importance, but are only used to distinguish different components. Likewise, words such as "a" or "an" do not imply a limitation of quantity, but rather indicate the presence of at least one. The term "multiple" involved in the embodiments of the present disclosure refers to greater than or equal to two.

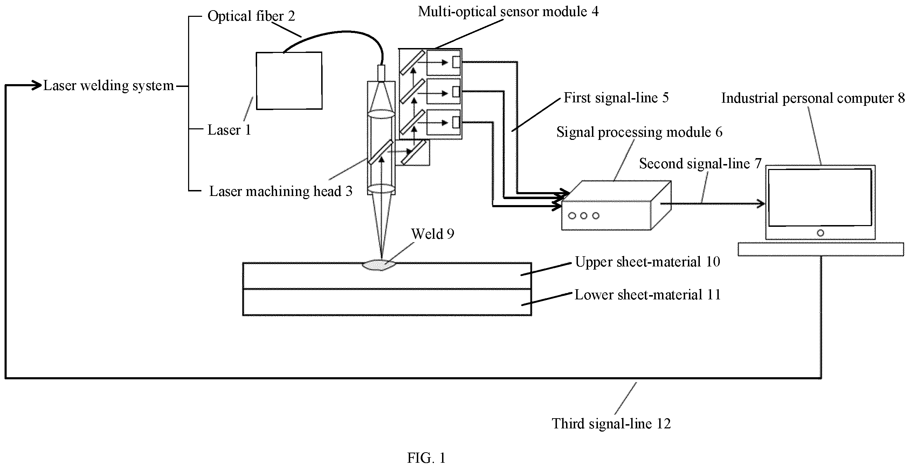

Reference can be made to FIG. 1, which is a schematic view of a framework of a system for detecting poor welding in laser welding provided in an embodiment of the present disclosure. As illustrated in FIG. 1, the system for detecting poor welding in laser welding includes a laser welding system, a multi-optical sensor module 4, a signal processing module 6, and an industrial personal computer (IPC) 8.

The laser welding system includes a laser 1, an optical fiber 2, and a laser machining head 3. The laser 1 is connected to the laser machining head 3 through the optical fiber 2. The multi-optical sensor module 4 is coaxially mounted on the laser machining head 3. The multi-optical sensor module 4 is connected to the signal processing module 6 through a first signal-line 5, The signal processing module 6 is connected to the IPC 8 through a second signal-line 7. The IPC 8 is connected to the laser welding system through a third signal-line 12.

In this embodiment, the laser light generated by the laser 1 is transmitted to the laser machining head 3 through the optical fiber 2, and then is incident onto an upper sheet-material 10 of a metal material to-be-machined through the laser machining head 3. After the upper sheet-material 10 absorbs the laser light, the upper sheet-material 10 is molten and then solidified to form a weld 9. The infrared light radiated by the weld 9 after welding is transmitted to the multi-optical sensor module 4 through the laser machining head 3. The multi-optical sensor module 4 can receive the infrared light signal radiated by the weld 9 after welding and convert the infrared light signal received into an electrical signal. The electrical signal is transmitted to the signal processing module 6 through the first signal-line 5. After the signal is processed, the signal processed is transmitted to the IPC 8 through the second signal-line 7. The IPC 8 processes and identifies the signal received, to determine whether the weld 9 has poor welding.

Optionally, when the weld 9 is determined to have poor welding, position information of the weld 9 is determined, and the position information of the weld 9 is transmitted to the laser welding system through the third signal-line 12, thereby controlling the laser welding system to perform repair welding on the weld 9.

It may be noted that, in sheet welding, when a phenomenon of poor welding occurs, a volume of an exposed portion of a welding molten pool does not substantially change, and an infrared light signal emitted by the welding molten pool does not substantially change during welding (namely, in a welding process), so that a poor-welding defect cannot be identified based on the infrared light signal emitted by the welding molten pool during welding. In other words, an upper sheet-material is not penetrated by melting of the welding molten pool during welding, and the heat of the weld is less transferred to a lower sheet-material 11 during welding. However, the initial heat accumulation in the weld of the upper sheet-material 10 increases significantly after welding (after the welding process is completed). Therefore, in the solution of the present disclosure, whether the weld 9 has poor welding is determined according to the infrared light signal radiated by the weld 9 after welding. In other words, the infrared light signal radiated after welding is used as a characteristic of the poor welding, to determine whether the weld 9 has a defect of the poor welding.

It may be understood that, the sheet material in the present disclosure refers to a material whose thickness is smaller than a preset thickness. The sheet material refers to a material whose thickness is less than the preset thickness. The thickness of the sheet material may range from 0.01 mm to 0.6 mm. In an example, the sheet material may refer to a material whose thickness is less than 0.5 mm. In a sheet welding process, the upper sheet-material 10 is a is made of a sheet material. During laser machining, laser light is first irradiated on the sheet material, so that the sheet material and a welding material underneath are melted, and then welded as a whole after re-melting.

The sheets made of different materials may have different corresponding preset thicknesses. For example, a preset thickness corresponding to a sheet material with good heat dissipation performance is larger than a preset thickness corresponding to a sheet material with poor heat dissipation performance. For example, a preset thickness corresponding to a copper sheet-material ranges from 0.15 mm to 0.6 mm, and a preferred thickness may be 0.25 mm. A preset thickness corresponding to an aluminum sheet-material may range from 0.15 mm to 0.6 mm, and a preferred thickness may be 0.2 mm. A preset thickness corresponding to a stainless-steel sheet-material may range from 0.1 mm to 0.5 mm, and a preferred thickness may be 0.15 mm.

During laser additive machining, the uppermost sheet material may be an upper cladding layer. In order to detect the poor welding formed by insufficient melting in a process of additive machining, a preset thickness corresponding to the sheet material ranges from 0.01 mm to 0.2 mm. Likewise, the upper cladding layers of different materials preferably have different thicknesses.

Prior to introducing the solutions of the present disclosure, the relevant names of the present disclosure are explained.

An envelope of the infrared light signal is an envelope of an electrical-signal-curve corresponding to the infrared light signal generated after the weld has no poor welding or the qualified weld is formed. The qualified weld here refers to a weld that has certain difference but can be accepted compared with the weld without poor welding.

A baseline of the infrared light signal is an amplitude range of the infrared light signal generated after the weld has no poor welding or the qualified weld is formed. The qualified weld here refers to a weld that has certain difference but can be accepted compared with the weld without poor welding.

An upper base edge-line of the infrared light signal is an upper edge-line of the envelope of the infrared light signal. The upper base edge-line of the infrared light signal includes multiple third points, or the upper base edge-line of the infrared light signal is composed of the multiple third points. An upper edge-line of the envelope may also be understood as an upper boundary line of an amplitude range of the infrared light signals generated by welds without poor welding or qualified welds formed at positions corresponding to multiple workpieces at one welding moment.

A lower base edge-line of the infrared light signal is a lower edge-line of the envelope of the infrared light signal. The lower edge-line of the envelope may also be understood as a lower boundary line of an amplitude range of the infrared light signals generated by welds without poor welding or qualified welds formed at positions corresponding to multiple workpieces at one welding moment.

A base midline of the infrared light signal is a midline of the upper base edge-line of the infrared light signal and the lower base edge-line of the infrared light signal. The base midline of the infrared light signal includes multiple second points, or the base midline of the infrared light signal is composed of the multiple second points. Optionally, the base midline of the infrared light signal may also be obtained by the following. Amplitudes of multiple welds without poor welding or multiple qualified welds in multiple times of historical welding at different delay moments are counted. An amplitude average-value corresponding to multiple same delay moments is calculated. Based on amplitude average-values corresponding to different delay moments, the base midline of the infrared light signal is obtained.

An average offset of the infrared light signal refers to an offset of the infrared light signal with respect to the base midline of the infrared light signal during welding. It may be understood that, the electrical-signal-curve corresponding to the infrared light signal includes multiple first points. The base midline includes multiple second points. The multiple first points are corresponding to the multiple second points in time. In terms of obtaining the average offset of the infrared light signal according to the electrical-signal-curve corresponding to the infrared light signal and the base midline of the infrared light signal includes the following. Multiple absolute values of differences are obtained by calculating an absolute value of a difference between an amplitude represented by each of the multiple first points and an amplitude represented by one of the multiple second points corresponding to a first point in time. The average offset of the infrared light signal is obtained by summing the multiple absolute values of the differences and averaging a sum result.

In laser machining applications, an infrared radiation signal corresponds to an infrared radiation signal having a wavelength in a range of 1250 nm to 1700 nm. A visible-light radiation signal corresponds to a visible-light radiation signal having a wavelength in a range of 400 nm to 700 nm. A laser machining reflection signal corresponds to a machining laser reflection signal during actual laser machining, for example, machining laser may have a wavelength of 915 nm, 1064 nm, 1080 nm, etc. The wavelength of the machining laser is related to the wavelength of the laser actually used. In some use environments, the appropriate range of the wavelength of the infrared radiation signal may be expanded beyond the range of 1250 nm to 1700 nm. In some use environments, the appropriate range of the wavelength of the visible-light radiation signal may be expanded beyond the range of 400 nm to 700 nm.

The following is a detailed description of specific implementations of solutions in the present disclosure.

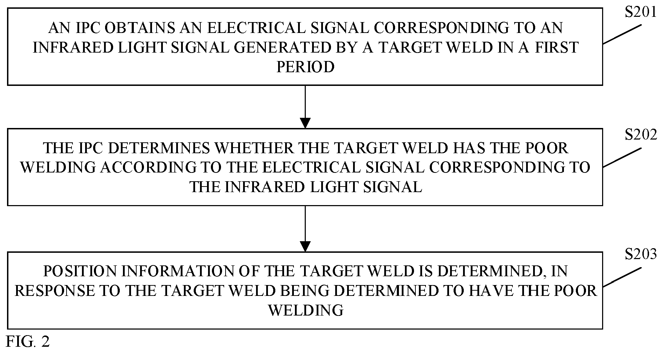

Reference can be made to FIG. 2, which is a schematic flowchart of a method for detecting poor welding in welding provided in an embodiment of the present disclosure. As illustrated in FIG. 2, the method includes the following.

S201, an IPC obtains an electrical signal corresponding to an infrared light signal generated by a target weld in a first period.

A start moment of the first period is not earlier than a moment at which the complete target weld is formed. The target weld is formed by laser machining a sheet material.

It may be noted that, in the present disclosure, the complete target weld does not mean that the target weld has no poor welding, but means a weld formed after one machining.

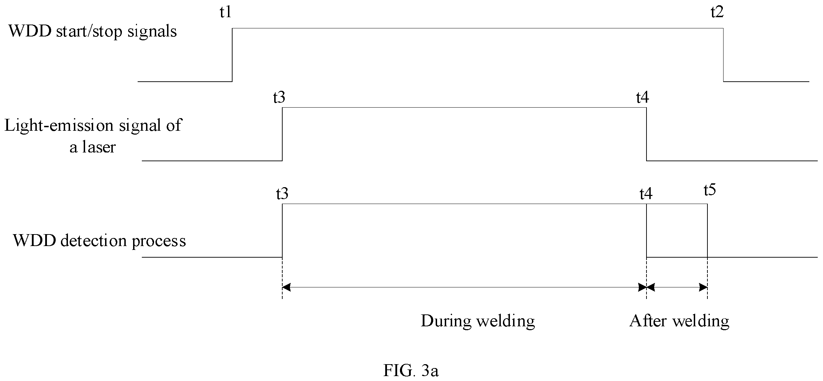

As illustrated in FIG. 3a, t1 is a moment at which a welding defect detection (WDD) system starts to operate. t2 is a moment at which the WDD system stops operating. t3 is a moment at which a laser starts to emit laser light. t4 is a moment at which the laser stops emitting laser light. The target weld is formed on a machining workpiece (such as an upper sheet-material 10 and a lower sheet-material 11) when the laser operates in a period of t3-t4. t5 is a moment at which a light intensity of the infrared light radiated by the target weld starts to be smaller than a light-intensity threshold, where the light-intensity threshold may be 0. A moment at which the complete target weld is formed is t4. Optionally, the first period is included in a period of t4-t5.

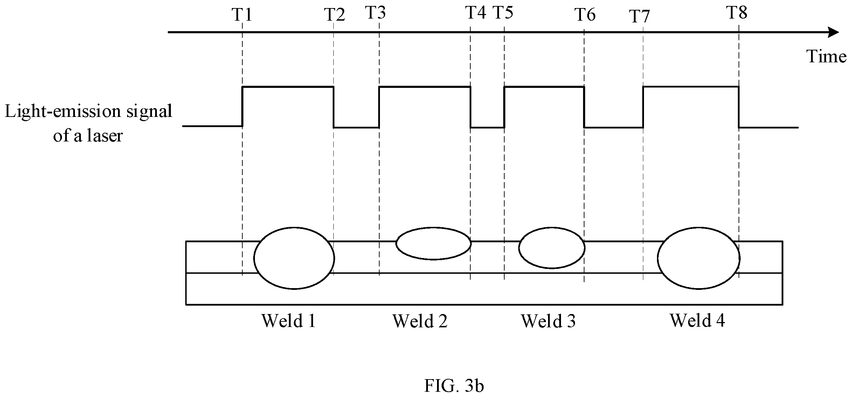

It may be understood that, the laser machining is a continuous process. The light emission of the laser is discontinuous, that is, the laser emits light in a period of time, and the laser does not emit light in the next period of time. The light emission and light non-emission of the laser are controlled by a light-emission signal of the laser. As illustrated in FIG. 3b, a weld 1, a weld 2, a weld 3 and a weld 4 are formed by the laser machining the sheet four times. A period from moment T 1 to moment T2 is a light-emitting period of the laser, the weld 1 is formed in the period of T1 to T2, and a moment at which the complete weld 1 is formed is moment T2. A period from moment T3 to moment T4 is a light-emitting period of the laser, the weld 2 is formed in the period of T3 to T4, and a moment at which the complete weld 2 is formed is moment T4. A period from moment T5 to moment T6 is a light-emitting period of the laser, the weld 3 is formed in the period of T5 to T6, and a moment at which the complete weld 3 is formed is moment T6. A period from moment T7 to moment T8 is a light-emitting period of the laser, the weld 4 is formed in the period of T7 to T8, and a moment at which the complete weld 4 is formed is moment T8.

During the welding, the multi-optical sensor module receives the infrared light signal radiated by the weld and converts the infrared light signal received into the electrical signal, and then transmits the electrical signal to the IPC. Optionally, before the multi-optical sensor module transmits the electrical signal to the IPC, that is, before the IPC determines whether the weld has poor welding by using the electrical signal, the multi-optical sensor module processes the electrical signal. The processing includes, but is not limited to, filtering and the like. In this way, the amplitude of the electrical signal may be increased, and the noise in the electrical signal may be reduced.

Optionally, before the IPC determines whether the weld has poor welding by using the electrical signal received, the IPC may process the electrical signal received. The processing includes, but is not limited to, filtering and the like. Then the IPC determines whether the weld has poor welding by using the electrical signal processed.

S202, the IPC determines whether the target weld has the poor welding according to the electrical signal corresponding to the infrared light signal.

In a possible implementation, the IPC determining whether the target weld has the poor welding according to the electrical signal corresponding to the infrared light signal includes the following. The IPC obtains an average offset of the infrared light signal according to the electrical-signal-curve corresponding to the infrared light signal and a base midline of the infrared light signal. The IPC determines whether the target weld has the poor welding according to the average offset of the infrared light signal. The target weld is determined to have the poor welding, in response to an amplitude of the electrical-signal-curve corresponding to the infrared light signal being greater than an amplitude of an upper base edge-line of the infrared light signal, and the average offset of the infrared light signal being out of a preset offset range.

The base midline of the infrared light signal is a midline of an upper base edge-line of the infrared light signal and a lower base edge-line of the infrared light signal. A midline of the upper base edge-line of the infrared light signal and the lower base edge-line of the infrared light signal is an envelope of electrical signals corresponding to infrared light signals generated by multiple welding having no poor welding obtained in multiple historical laser machining processes after welding. The multiple welds having no poor welding are formed by performing laser machining on the same machining material using the same machining technology.

It may be understood that, since the electrical signal corresponding to the infrared light signal is composed of multiple points, the upper base edge-line and the lower base edge-line corresponding to the infrared light signal may also be regarded as being composed of multiple points, and a first point in the upper base edge-line corresponding to the infrared light signal and a first point in the lower base edge-line corresponding to the infrared light signal may be regarded as being collected at a moment when a complete weld is formed in multiple historical laser machining processes. The base midline corresponding to the infrared light signal may also be regarded as being composed of multiple points. An amplitude corresponding to each point in the base midline corresponding to the infrared light signal is an amplitude average-value of each point in the upper base edge-line and a corresponding point in the lower base edge-line corresponding to the infrared light signal in time.

In a possible implementation, the electrical-signal-curve corresponding to the infrared light signal includes multiple first points. The base midline includes multiple second points. The multiple first points are corresponding to the multiple second points in time. The IPC obtaining the average offset of the infrared light signal according to the electrical-signal-curve corresponding to the infrared light signal and the base midline of the infrared light signal includes the following. The IPC obtains multiple absolute values of differences by calculating an absolute value of a difference between an amplitude represented by each of the multiple first points and an amplitude represented by one of the multiple second points corresponding to a first point in time. The IPC obtains the average offset of the infrared light signal by summing the plurality of absolute values of the differences and averaging a sum result.

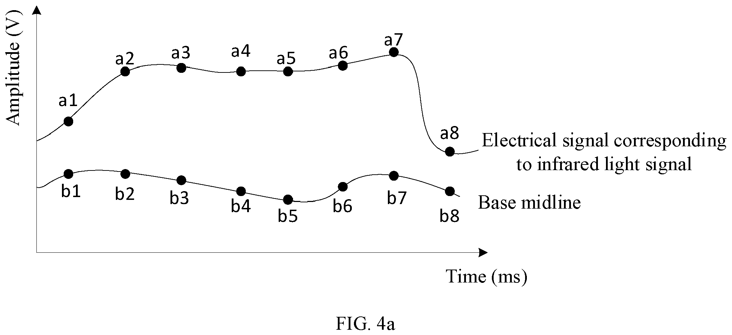

In an example, as illustrated in FIG. 4a, it is assumed that the electrical-signal-curve corresponding to the infrared light signal includes eight first points, which are a1, a2, a3, a4, a5, a6, a7, and a8, respectively. The base midline corresponding to the infrared light signal includes eight second points, which are b1, b2, b3, b4, b5, b6, b7, and b8, respectively. The eight first points are in a one-to-one correspondence with the eight second points in time. The IPC obtains eight absolute values by calculating an absolute value of a difference between an amplitude represented by each of the eight first points and one of the eight second points corresponding to a first point in time one by one, and then sums the eight absolute values and averages a sum result. An obtained result is the average offset of the infrared light signal.

After obtaining the average offset of the infrared light signal, the IPC determines whether the average offset of the infrared light signal is out of a preset offset range. If the average offset is out of the preset offset range, the IPC determines that the target weld has poor welding. If the average offset is out of the preset offset range, the IPC determines that the target weld has no poor welding.

In another possible implementation, the electrical-signal-curve corresponding to the infrared light signal includes multiple first points. The base midline includes multiple second points. The multiple first points are corresponding to the multiple second points in time. The IPC obtains multiple absolute values of differences by calculating an absolute value of a difference between an amplitude represented by each of the multiple first points and an amplitude represented by one of the multiple second points corresponding to a first point in time. The IPC obtains differences each greater than 0 from the differences obtained, and then sums the differences each greater than 0 and averages a sum result, to obtain an upper average offset of the infrared light signal. The IPC determines whether the upper average offset of the infrared light signal is out of a preset offset range. If the upper average offset is out of the preset offset range, the IPC determines that the target weld has poor welding. If the upper average offset is not out of the preset offset range, the IPC determines that the target weld has no poor welding. It may be understood that, herein, determining whether the upper average offset of the infrared light signal is out of the preset offset range specifically refers to determining whether the upper average offset of the infrared light signal is greater than an upper limit of the preset offset range. If the upper average offset of the infrared light signal is greater than the upper limit of the preset offset range, the IPC determines that the target weld has poor welding.

Since the heat radiated by a weld having poor welding after welding is higher than the heat radiated by a weld having no poor welding after welding, the above-mentioned difference greater than 0 can better represent the heat radiated by the weld after welding, so that a more accurate result can be obtained when determining whether the weld has poor welding according to the difference greater than 0.

In another possible implementation, the electrical-signal-curve corresponding to the infrared light signal includes multiple first points. The base midline includes multiple second points. The multiple first points are corresponding to the multiple second points in time. The IPC obtains multiple absolute values of differences by calculating an absolute value of a difference between an amplitude represented by each of the multiple first points and an amplitude represented by one of the multiple second points corresponding to a first point in time. The IPC obtains differences each less than 0 from the differences obtained, and then sums the differences each less than 0 and averages a sum result, to obtain a lower average offset of the infrared light signal. The IPC determines whether the lower average offset of the infrared light signal is out of a preset offset range. If the lower average offset is out of the preset offset range, the IPC determines that the target weld has poor welding. If the lower average offset is not out of the preset offset range, the IPC determines that the target weld has no poor welding. It may be understood that, herein, determining whether the lower average offset of the infrared light signal is out of the preset offset range specifically refers to determining whether the lower average offset of the infrared light signal is less than a lower limit of the preset offset range. If the lower average offset of the infrared light signal is less than the lower limit of the preset offset range, the IPC determines that the target weld has poor welding.

In an optional implementation, the preset offset range satisfies: [*-µ-*4*σ*, *µ+*4*σ*], where *µ* is an average value of average offsets of electrical signals corresponding to infrared light signals generated in a second period by multiple complete welds having no poor welding obtained in historical laser machining processes, and *σ* is a standard deviation of the average offsets of the electrical signals corresponding to the infrared light signals generated in the second period by the multiple complete welds having no poor welding obtained in the historical laser machining processes. A start moment of the second period is not earlier than a moment at which any one of the multiple complete welds having no poor welding is formed.

It may be understood that, a moment at which a complete weld is formed in a historical laser machining process refers to a moment at which a laser stops operating in one machining process, and the start moment of the second period is not earlier than a moment at which the laser stops operating. In other words, the IPC obtains electrical signals corresponding to infrared light signals radiated by multiple welds having no poor welding after welding formed in a historical laser machining process, and then calculates an average value *µ* and a standard deviation *σ* of average offsets of the electrical signals corresponding to the infrared light signals radiated by the multiple welds having no poor welding after welding.

Optionally, a difference between the start moment of the first period and the moment at which the complete target weld is formed may be greater than or equal to a difference between the start moment of the second period and the moment at which the complete weld is formed in the historical laser machining process.

It may be noted that, the difference between the start moment of the first period and the moment at which the complete target weld is formed is set to be greater than the difference between the start moment of the second period and the moment at which the complete weld is formed in the historical laser machining process, for following reasons. After the complete welds are formed, the heat radiated by the weld is gradually reduced. After the complete welds are formed, for two welds having no poor welding, the heat radiated by one weld is the same as or less different from the heat radiated by the other weld at the same moment. For one weld having poor welding and one weld having no poor welding, the heat radiated by the weld having poor welding is higher than the heat radiated by the weld having no poor welding at the same moment. There may even be a situation that after the complete welds are formed, the heat radiated by the weld having poor welding at a third moment is higher than the heat radiated by the weld having no poor welding at a fourth moment, where the third moment is later than the fourth moment. In other words, for a weld A, if the heat radiated by the weld A at the third moment is higher than the heat radiated by the weld having no poor welding at the fourth time, it indicates that the weld A has poor welding.

Therefore, when determining whether the target weld has poor welding, the electrical signal corresponding to the infrared light signal generated by the target weld in the first period is obtained, and the electrical signal corresponding to the infrared light signal generated in the first period is compared with an expectation and a variance of electrical signals corresponding to infrared light signals generated in the second period by multiple welds having no poor welding formed in the historical laser machining process, to determine whether the target weld has poor welding. Therefore, the accuracy of poor welding detection can be improved.

In addition, after the complete welds are formed, the heat radiated by the weld gradually decreases, so that an amplitude of the electrical signal corresponding to the infrared light signal generated by the target weld obtained in the first period is smaller than an amplitude of an electrical signal corresponding to an infrared light signal generated by the target weld before the first period. Therefore, an amplitude processed by an IPC is relatively small, and a processing speed is relatively fast, thereby improving the efficiency of poor welding detection.

In a possible implementation, the IPC can also determine whether the target weld has poor welding according to following manners.

In manner 1, the IPC obtains an upper limit-value of the infrared light signal according to the electrical-signal-curve of the infrared light signal and an upper base edge-line of the infrared light signal. The IPC determines whether the target weld has poor welding according to the upper limit-value of the infrared light signal. The target weld is determined to have the poor welding, in response to an amplitude of the electrical-signal-curve corresponding to the infrared light signal being greater than an amplitude of the upper base edge-line of the infrared light signal, and the upper limit-value of the infrared light signal being greater than an upper limit-threshold.

The upper base edge-line of the infrared light signal is an upper edge-line of an envelope, where the envelop is obtained according to electrical signals corresponding to infrared light signals generated after complete welds having no poor welding are formed in the historical welding process.

In an example, the upper limit-value of the infrared light signal is obtained as follows. The electrical-signal-curve corresponding to the infrared light signal includes multiple first points, or the electrical-signal-curve corresponding to the infrared light signal is composed of the multiple first points. The upper base edge-line of the infrared light signal includes multiple third points, or the upper base edge-line of the infrared light signal is composed of the multiple third points. The multiple first points are corresponding to the multiple third points in time. The IPC calculates a difference between an amplitude represented by each of the multiple first points and an amplitude represented by one of the multiple third points corresponding to a first point in time one by one. In this manner, the IPC obtains multiple differences, and determines a maximum of the multiple differences as the upper limit-value of the infrared light signal.

In an example, the upper limit-threshold is obtained as follows. A base midline of the infrared light signal includes multiple second points, or the base midline of the infrared light signal is composed of the multiple second points. The multiple second points are corresponding to the multiple third points in time. The IPC calculates a difference between an amplitude represented by each of the multiple third points and an amplitude represented by one of the multiple second points corresponding to a third point in time one by one. In this manner, the IPC obtains multiple differences, and determines a maximum of the multiple differences as the upper limit-threshold of the infrared light signal.

After the complete welds are formed, the energy of the infrared light generated by the weld having the poor welding is higher than the energy of the infrared light generated by the weld having no poor welding. Accordingly, the upper limit-value of the infrared light signal generated by the weld having the poor welding is greater than the upper limit-value of the infrared light signal generated by the weld having no poor welding. Therefore, after the complete target weld is formed, the upper limit-value of the infrared light signal generated by the target weld is compared with the upper limit-threshold, so as to determine whether the energy of the infrared light generated by the target weld is higher than the energy of the infrared light generated by the weld having no poor welding, thereby determining whether the target weld has the poor welding.

In manner 2, the IPC obtains an upper local-area of the infrared light signal according to the electrical-signal-curve corresponding to the infrared light signal and an upper base edge-line of the infrared light signal. The upper local-area of the infrared light signal is an area of a region between the upper base edge-line of the infrared light signal and a part of the electrical-signal-curve corresponding to the infrared light signal whose amplitude is greater than an amplitude of the upper base edge-line. The IPC determines whether the target weld has poor welding according to the upper local-area of the infrared light signal. The IPC determines that the target weld has the poor welding, in response to an amplitude of the electrical-signal-curve corresponding to the infrared light signal being greater than the amplitude of the upper base edge-line of the infrared light signal, and the upper local-area of the infrared light signal being larger than an upper local-area threshold.

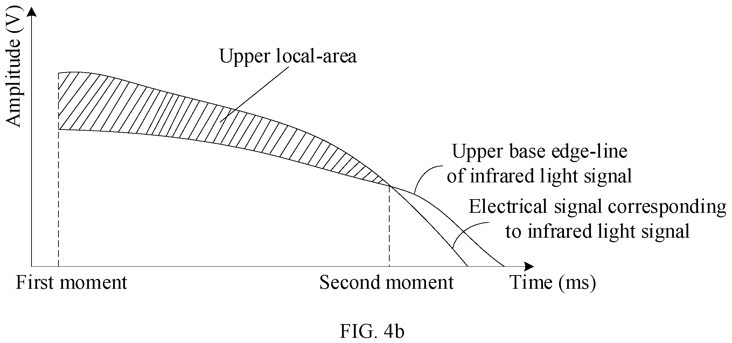

In an example, the upper local-area of the infrared light signal is obtained as follows. A first moment and a second moment are determined. The first moment is the start moment of the first period. The second moment is a moment at which the electrical-signal-curve corresponding to an infrared light signal intersects with the upper base edge-line of the infrared light signal. The electrical-signal-curve corresponding to the infrared light signal includes multiple first points, or the electrical-signal-curve corresponding to the infrared light signal is composed of the multiple first points. The upper base edge-line of the infrared light signal includes multiple third points, or the upper base edge-line of the infrared light signal is composed of the multiple third points. The multiple first points are corresponding to the multiple third points in time. The second moment is a moment at which an amplitude represented by a first point is identical to an amplitude represented by a third point corresponding to the first point in time. The IPC calculates a first integral area under the electrical-signal-curve corresponding to an infrared light signal between the first moment and the second moment, and calculates a second integral area under the upper base edge-line of the infrared light signal between the first moment and the second moment. The IPC determines a difference between the first integral area and the second integral area as the upper local-area of the infrared light signal, as illustrated in FIG. 4b.

In an example, the upper local-area threshold is determined as follows. The upper base edge-line of the infrared light signal includes multiple third points, or the upper base edge-line of the infrared light signal is composed of the multiple third points. A base midline of the infrared light signal includes multiple second points, or the base midline of the infrared light signal is composed of the multiple second points. The IPC determines a start third-point and a terminal third-point from the upper base edge-line of the infrared light signal. The start third-point is a third point corresponding to a start second-point in time. The terminal third-point is a third point that represents an amplitude identical to an amplitude represented by a corresponding second point in time. The start second-point is a first second-point in the base midline of the infrared light signal. The IPC calculates a third integral area under a part of the upper base edge-line of the infrared light signal between the start third-point and the terminal third-point, and calculates a fourth integral area under a part of the base midline of the infrared light signal between one of the multiple second points corresponding to the start third-point in time and one of the multiple second points corresponding to the terminal third-point in time. The IPC determines half of a difference between the third integral area and the fourth integral area as the upper local-area threshold.

After the complete welds are formed, the energy of the infrared light generated by the weld having the poor welding is higher than the energy of the infrared light generated by the weld having no poor welding. Accordingly, the upper local-area of the infrared light signal generated by the weld having the poor welding is larger than the upper local-area of the infrared light signal generated by the weld having no poor welding. Therefore, after the complete target weld is formed, the upper local-area of the infrared light signal generated by the target weld is compared with the upper local-area threshold, so as to determine whether the energy of the infrared light generated by the target weld is higher than the energy of the infrared light generated by the weld having no poor welding, thereby determining whether the target weld has poor welding.

In manner 3, the IPC determines a slope of the infrared light signal according to the electrical-signal-curve corresponding to the infrared light signal, and determines whether the target weld has poor welding according to the slope of the infrared light signal. The IPC determines that the target weld has the poor welding, in response to the slope of the infrared light signal being greater than a slope threshold.

Further, the IPC determines that the target weld has the poor welding, in response to the amplitude of the electrical-signal-curve corresponding to the infrared light signal being higher than the amplitude of the upper base edge-line of the infrared light signal, and the slope of the infrared light signal being greater than the slope threshold.

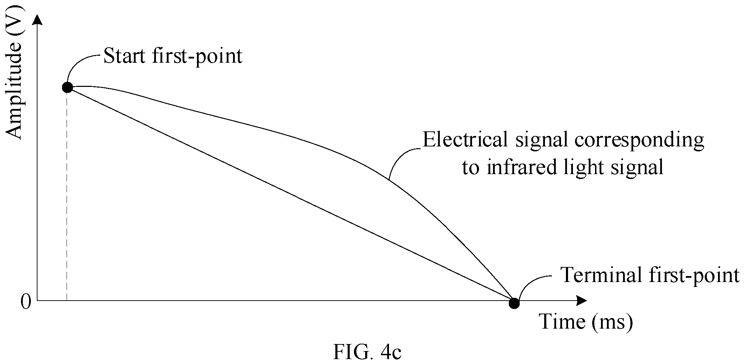

In an example, the slope of the infrared light signal is obtained as follows. The IPC determines a start first-point and a terminal first-point from the electrical-signal-curve corresponding to the infrared light signal. An amplitude represented by the start first-point is collected at the start moment of the first period. The terminal first-point is one of the multiple first points that represents an amplitude of 0. As illustrated in FIG. 4c, the IPC determines a collection moment of the start first-point and a collection moment of the terminal first-point. The IPC calculates a first difference between an amplitude represented by the start first-point and an amplitude represented by the terminal first-point, calculates a second difference between the collection moment of the start first-point and the collection moment of the terminal first-point, and calculates a ratio of the first difference to the second difference. The ratio is the slope of the infrared light signal.

It may be understood that an amplitude of 0 means that a difference between a temperature of the target weld and the operating ambient temperature is less than a preset temperature value. For example, an amplitude of 0 means that the temperature of the target weld is the same as the operating ambient temperature.

In an example, the slope threshold is obtained as follows. The IPC determines a start second-point and a terminal second-point from the base midline of the infrared light signal. The start second-point is one of the multiple second points in the base midline of the infrared light signal corresponding to the start first-point in time. The terminal second-point is one of the multiple second points in the base midline of the infrared light signal corresponding to the terminal first-point in time. The IPC calculates a third difference between the amplitude represented by the start second-point and the amplitude represented by the terminal second-point. The IPC calculates a ratio of the third difference to the second difference, and determines twice an absolute value of the ratio as the slope threshold.

After the complete welds are formed, the energy of the infrared light generated by the weld having the poor welding is higher than the energy of the infrared light generated by the weld having no poor welding. Accordingly, the slope of the infrared light signal generated by the weld having the poor welding is greater than the slope of the infrared light signal generated by the weld having no poor welding. Therefore, after the complete target weld is formed, the slope of the infrared light signal generated by the target weld is compared with the slope threshold, so as to determine whether the energy of the infrared light generated by the target weld is higher than the energy of the infrared light generated by the weld having no poor welding, thereby determining whether the target weld has poor welding.

In manner 4, the IPC obtains an amplitude average-value of the infrared light signal according to the electrical-signal-curve corresponding to the infrared light signal, and determines whether the target weld has poor welding according to the amplitude average-value of the infrared light signal. The IPC determines that the target weld has poor welding, in response to the amplitude average-value of the infrared light signal being greater than an average-value threshold.

Further, the IPC determines that the target weld has poor welding, in response to the amplitude of the electrical-signal-curve corresponding to the infrared light signal being higher than the amplitude of the upper base edge-line of the infrared light signal, and the amplitude average-value of the infrared light signal being greater than the average-value threshold.

In an example, the mean threshold is determined as follows. The IPC calculates an average value of amplitudes represented by multiple the second points included in the base midline of the infrared light signal, and determines twice the average value as the average-value threshold.

After the complete welds are formed, the energy of the infrared light generated by the weld having the poor welding is higher than the energy of the infrared light generated by the weld having no poor welding. Accordingly, the amplitude average-value of the infrared light signal generated by the weld having the poor welding is greater than the amplitude average-value of the infrared light signal generated by the weld having no poor welding. Therefore, after the complete target weld is formed, the amplitude average-value of the infrared light signal generated by the target weld is compared with the average-value threshold, so as to determine whether the energy of the infrared light generated by the target weld is higher than the energy of the infrared light generated by the weld having no poor welding, thereby determining whether the target weld has poor welding.

In a possible implementation, the method in this embodiment further includes the following. The IPC displays a graph of an electrical-signal-curve corresponding to the infrared light signal generated by the target weld after the complete target weld is formed, and displays a result of whether the target weld has poor welding.

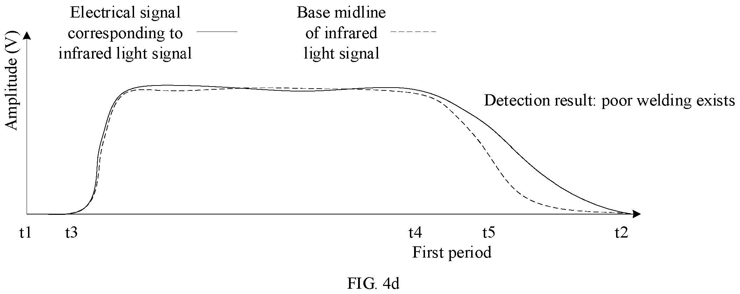

FIG. 4d is a schematic diagram of a detection result provided in an embodiment of the present disclosure. As illustrated in FIG. 4d, the IPC displays the electrical signal corresponding to the infrared light signal generated by the target weld after welding and the base midline of the infrared light signal, and shows whether the target weld has poor welding.

By displaying the graph of the electrical-signal-curve corresponding to the laser reflection signal and displaying the result of whether the target weld has the poor welding, it is convenient for a machining personnel to observe the laser machining result in real time, that is, whether the weld has the poor welding after the laser machining.

S203, position information of the target weld is determined, in response to the target weld being determined to have the poor welding.

The position information of the target weld may be identified by the serial number of the target weld. It may be understood that since the laser machining is a continuous process, and the weld obtained is also continuous, the position of the weld can be represented by the serial number of the weld.

After obtaining the position information of the target weld, the IPC transmits the position information of the target weld to the laser welding system, so that the laser welding system re-machines the target weld according to the position information of the target weld, so as to eliminate poor welding.

In a possible implementation, when determining that the target weld has the poor welding, the IPC obtains, from a laser welding system, a distance between the laser machining head and the machining material (that is, the foregoing upper sheet-material 10) when the target weld is formed during machining, and the distance may be referred to as a machining distance. The IPC compares the machining distance with a preset distance. If the machining distance is different from the preset distance, it indicates that the reason why the target weld has the poor welding may be that the defocus amount is changed due to the change of the machining distance, resulting in poor welding. The IPC sends indication information to the laser welding system to instruct the laser welding system to adjust the distance between the laser machining head and the sheet, where the distance adjusted is the same as the preset distance. The preset distance is manually set distance between the laser machining head and the machining material, so that the weld formed during machining does not have poor welding.

Optionally, if the machining distance is the same as the preset distance, it indicates that the reason for having the poor welding is not the defocus amount. The IPC obtains the temperature of the lens in the laser machining head during machining. It may be understood that when the lens is contaminated, the temperature of the lens may rise, and therefore, whether the lens is contaminated is determined by determining whether the temperature of the lens is higher than the temperature of the lens without contamination. When determining that the temperature of the lens is higher than the temperature of the lens without contamination, the IPC sends warning information to the machining personnel, so as to remind the machining personnel that the lens in the laser machining head is contaminated.

Optionally, if the machining distance is the same as the preset distance, it indicates that the reason for having the poor welding is not the defocus amount. The IPC sends indication information to the laser welding system, so as to instruct the laser welding system to increase the power of the laser.

After the foregoing adjustment is completed, the IPC transmits the position information of the target weld to the laser welding system, so that the laser welding system re-machines the target weld according to the position information of the target weld, to eliminate the poor welding.

It can be seen that, in the solution of the present disclosure, during laser machining, the multi-optical sensor module obtains the infrared light signal generated by the weld, and then whether the weld has the poor welding is determined according to the infrared light signal. Compared with the related art, the solution of the present disclosure has the non-contact and real-time characteristics, and the full inspection can be performed in industrial production. In addition, by means of the solution of the present disclosure, such a defect of poor welding can be detected. After the position information of the target weld is obtained, the position information of the target weld is transmitted to the laser welding system, so that the laser welding system re-machines the target weld, thereby realizing the purpose of automatic repair welding.

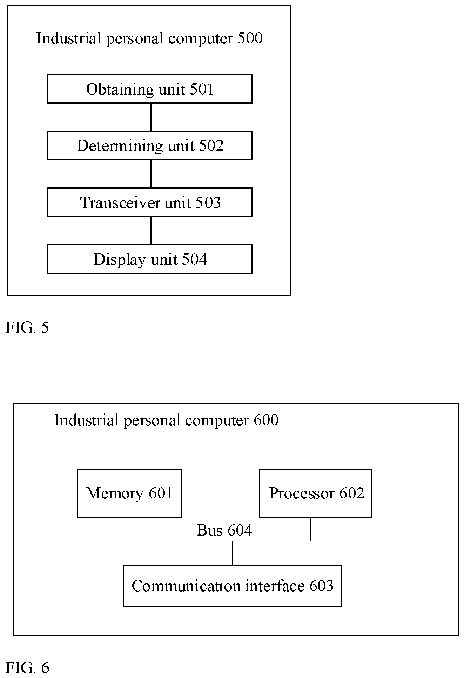

Reference can be made to FIG. 5, which is a schematic structural diagram of an IPC provided in an embodiment of the present disclosure. As illustrated in FIG. 5, the IPC 500 includes an obtaining unit 501 and a determining unit 502. The obtaining unit 501 is configured to obtain an electrical signal corresponding to an infrared light signal generated by a target weld in a first period. A start moment of the first period is not earlier than a moment at which the complete target weld is formed. The target weld is formed by laser machining a sheet material. The determining unit 502 is configured to determine whether the target weld has the poor welding according to the electrical signal corresponding to the infrared light signal.

In a possible implementation, the determining unit 502 is specifically configured to determines whether the target weld has the poor welding according to an electrical-signal-curve corresponding to the infrared light signal.

In a possible implementation, the determining unit 502 is specifically configured to obtain an average offset of the infrared light signal according to the electrical-signal-curve corresponding to the infrared light signal and a base midline of the infrared light signal, and determine whether the target weld has the poor welding according to the average offset of the infrared light signal. The target weld is determined to have the poor welding, in response to an amplitude of the electrical-signal-curve corresponding to the infrared light signal being greater than an amplitude of an upper base edge-line of the infrared light signal, and the average offset of the infrared light signal being out of a preset offset range.

In a possible implementation, the electrical-signal-curve corresponding to the infrared light signal includes multiple first points. The base midline includes multiple second points. The multiple first points are corresponding to the multiple second points in time. In terms of obtaining the average offset of the infrared light signal according to the electrical-signal-curve corresponding to the infrared light signal and the base midline of the infrared light signal, the determining unit 502 is specifically configured to obtain multiple absolute values of differences by calculating an absolute value of a difference between an amplitude represented by each of the multiple first points and an amplitude represented by one of the multiple second points corresponding to a first point in time, and obtain the average offset of the infrared light signal by summing the multiple absolute values of the differences and averaging a sum result.

In a possible implementation, the preset offset range satisfies: [-*µ*-4*σ*, *µ*+4*σ*], where *µ* is an average value of average offsets of electrical signals corresponding to infrared light signals generated in a second period by multiple complete welds having no poor welding obtained in a historical laser machining process, and *σ* is a standard deviation of the average offsets of the electrical signals corresponding to the infrared light signals generated in the second period by the multiple complete welds having no poor welding obtained in the historical laser machining process. A start moment of the second period is not earlier than a moment at which any one of the multiple complete welds having no poor welding is formed.

In a possible implementation, the determining unit 502 is specifically configured to obtain an upper limit-value of the infrared light signal according to the electrical-signal-curve corresponding to the infrared light signal and an upper base edge-line of the infrared light signal, and determines whether the target weld has the poor welding according to the upper limit-value of the infrared light signal. The target weld is determined to have the poor welding, in response to an amplitude of the electrical-signal-curve corresponding to the infrared light signal being greater than an amplitude of the upper base edge-line of the infrared light signal, and the upper limit-value of the infrared light signal being greater than an upper limit-threshold.

In a possible implementation, the electrical-signal-curve corresponding to the infrared light signal includes multiple first points. The upper base edge-line includes multiple third points. The multiple first points are corresponding to the multiple third points in time. In terms of obtaining the upper limit-value of the infrared light signal according to the electrical-signal-curve corresponding to the infrared light signal and the upper base edge-line of the infrared light signal, the determining unit 502 is specifically configured to obtain multiple differences by calculating a difference between an amplitude represented by each of the multiple first points and an amplitude represented by one of the multiple third points corresponding to a first point in time, and determine a maximum of the multiple differences as the upper limit-value of the infrared light signal.

In a possible implementation, a base midline of the infrared light signal includes multiple second points. The upper base edge-line includes multiple third points. The multiple second points are corresponding to the multiple third points in time. The determining unit 502 is further configured to obtain multiple differences by calculating a difference between an amplitude represented by each of the multiple third points and an amplitude represented by one of the multiple second points corresponding to a third point in time, and determines a maximum of the multiple differences as the upper limit-threshold.

In a possible implementation, the determining unit 502 is specifically configured to obtain an upper local-area of the infrared light signal according to the electrical-signal-curve corresponding to the infrared light signal and an upper base edge-line of the infrared light signal. The upper local-area of the infrared light signal is an area of a region between the upper base edge-line and a part of the electrical-signal-curve corresponding to the infrared light signal whose amplitude is greater than an amplitude of the upper base edge-line. The determining unit is configured to determine whether the target weld has the poor welding according to the upper local-area of the infrared light signal. The target weld is determined to have the poor welding, in response to an amplitude of the electrical-signal-curve corresponding to the infrared light signal being greater than the amplitude of the upper base edge-line of the infrared light signal, and the upper local-area of the infrared light signal being larger than an upper local-area threshold.

In a possible implementation, in terms of obtaining the upper local-area of the infrared light signal according to the electrical-signal-curve corresponding to the infrared light signal and the upper base edge-line of the infrared light signal, the determining unit 502 is specifically configured to determine a first moment and a second moment. The first moment is the start moment of the first period. The second moment is a moment at which the electrical-signal-curve corresponding to the infrared light signal intersects with the upper base edge-line. The determining unit 502 is specifically configured to calculate a first integral area under the electrical-signal-curve corresponding to the infrared light signal between the first moment and the second moment, calculate a second integral area under the upper base edge-line between the first moment and the second moment, and determine a difference between the first integral area and the second integral area as the upper local-area of the infrared light signal.

In a possible implementation, the upper base edge-line of the infrared light signal includes multiple third points. A base midline of the infrared light signal includes multiple second points. The multiple third points are corresponding to the multiple second points in time. The determining unit 502 is further configured to determine a start third-point and a terminal third-point from the upper base edge-line of the infrared light signal. The start third-point is one of the multiple third points corresponding to a start second-point in time. The terminal third-point is one of the multiple third points that represents an amplitude identical to an amplitude represented by a corresponding second point in time. The start second-point is a first second-point in the base midline of the infrared light signal. The determining unit 502 is further configured to calculate a third integral area under a part of the upper base edge-line of the infrared light signal between the start third-point and the terminal third-point, calculate a fourth integral area under a part of the base midline of the infrared light signal between one of the multiple second points corresponding to the start third-point in time and one of the multiple second points corresponding to the terminal third-point in time, and determine half of a difference between the third integral area and the fourth integral area as the upper local-area threshold.

In a possible implementation, the determining unit 502 is specifically configured to determine a slope of the infrared light signal according to the electrical-signal-curve corresponding to the infrared light signal, and determine whether the target weld has the poor welding according to the slope of the infrared light signal. The target weld is determined to have the poor welding, in response to the slope of the infrared light signal being greater than a slope threshold.

Optionally, the electrical-signal-curve corresponding to the infrared light signal includes multiple first points. In terms of determining the slope of the infrared light signal according to the electrical-signal-curve corresponding to the infrared light signal, the determining unit 502 is specifically configured to determine a start first-point and a terminal first-point from the multiple first points. An amplitude represented by the start first-point is collected at the start moment of the first period. The terminal first-point is one of the multiple first points that represents an amplitude of 0. The determining unit 502 is specifically configured to determine a collection moment of the start first-point and a collection moment of the terminal first-point, calculate a first difference between an amplitude represented by the start first-point and an amplitude represented by the terminal first-point, calculate a second difference between the collection moment of the start first-point and the collection moment of the terminal first-point, calculate a ratio of the first difference to the second difference, and determine the ratio as the slope of the infrared light signal.

Optionally, a base midline of the infrared light signal includes multiple second points. The multiple first points are corresponding to the multiple second points in time. The determining unit 502 is further configured to determine a start second-point and a terminal second-point from the multiple second points. The start second-point is one of the multiple second points in the base midline of the infrared light signal corresponding to the start first-point in time. The terminal second-point is one of the multiple second points in the base midline of the infrared light signal corresponding to the terminal first-point in time. The determining unit 502 is configured to calculate a third difference between an amplitude represented by the start second-point and an amplitude represented by the terminal second-point, calculate a ratio of the third difference to the second difference, and determine twice an absolute value of the ratio as the slope threshold.

With reference to the first aspect, in a possible implementation, the electrical-signal-curve corresponding to the infrared light signal includes multiple first points. The determining unit 502 is specifically configured to calculate an amplitude average-value of the infrared light signal according to the multiple first points. The amplitude average-value of the of the infrared light signal is an average value of amplitudes represented by the multiple first points. The determining unit 502 is configured to determine whether the target weld has the poor welding according to the amplitude average-value of the infrared light signal. The determining unit 502 determines that the target weld has the poor welding, in response to the amplitude average-value of the infrared light signal being greater than an average-value threshold.

Optionally, a base midline of the infrared light signal includes multiple second points. Twice the average value as the average-value threshold is determined.

In a possible implementation, the obtaining unit 501 is further configured to obtain position information of the target weld, in response to the target weld being determined to have the poor welding. IPC 500 further includes a transceiver unit 503. The transceiver unit 503 is configured to transmit the position information of the target weld to a laser welding system, to make the laser welding system re-machine the target weld according to the position information of the target weld.

In a possible implementation, the IPC 500 further includes a display unit 504. The display unit 504 is configured to display a graph of an electrical-signal-curve corresponding to the infrared light signal generated by the target weld after the complete target weld is formed, and display a result of whether the target weld has the poor welding.

It may be noted that, the above various units (the obtaining unit 501, the determining unit 502, the transceiver unit 503, and the display unit 704) are configured to perform related operations of the above method. For example, the obtaining unit 501 is configured to perform the related content of S201, the determining unit 502 is configured to perform the related content of S202, and the transceiver unit 503 and the display unit 504 are configured to perform the related content of S203. Each unit or module in the IPC 500 may be combined separately or entirely into one or several other units or modules, or a unit(s) or module(s) of each unit or module may be further split into multiple functionally smaller units or modules, which may implement the same operation without affecting the implementation of the technical effects of the embodiments of the present disclosure. The above units or modules are divided based on logical functions. In practical applications, functions of a unit (or module) can also be implemented by multiple units (or modules), or functions of multiple units (or modules) can be implemented by one unit (or module).

Based on the description of the above method embodiments and apparatus embodiments, reference can be made to FIG. 6, which is a schematic structural view of an IPC 600 provided in another embodiment of the present disclosure. The IPC 600 (specifically, the IPC 600 may be a computer device) illustrated in the FIG. 6 includes a memory 601, a processor 602, a communication interface 603, and a bus 604. The memory 601, the processor 602, and the communication interface 603 are communicatively connected to one another via the bus 604.

The memory 601 may be a read only memory (ROM), a static storage device, a dynamic storage device, or random access memory (RAM).

The memory 601 can store programs. When the programs stored in the memory 601 are executed by the processor 602, the processor 602 and the communication interface 603 are configured to perform various operations of the method for detecting poor welding in welding in the embodiments of the present disclosure.

The processor 602 may adopt a general-purpose central processing unit (CPU), a microprocessor, an application specific integrated circuit (ASIC), a graphics processing unit (GPU), or one or more integrated circuit, and be configured to execute the related programs. Therefore, the functions required to be executed by the units in the IPC 600 in the embodiments of the present disclosure are implemented, or the method for detecting poor welding in welding in the embodiments of the present disclosure is executed.

The processor 602 may also be an integrated circuit chip with signal processing capabilities. During implementation, each operation of the method for detecting poor welding in welding in the present disclosure may be completed by an integrated logic circuit of hardware in the processor 602 or an instruction in the form of software. The above processor 602 may also be a general-purpose processor, a digital signal processor (DSP), an ASIC, a field programmable gate array (FPGA), or other programmable logic devices, discrete gates or transistor logic devices, discrete hardware components. The methods, operations, and logic blocks disclosed in embodiments of the present disclosure can be implemented or executed. The general-purpose processor may be a microprocessor, or the processor may be any conventional processor or the like. The operations of the method disclosed in embodiments of the present disclosure may be directly implemented by a hardware decoding processor, or may be performed by hardware and software modules in the decoding processor. The software module can be located in a storage medium mature in the art, such as a RAM, a flash memory, a ROM, a programmable read only memory (PROM), or an electrically erasable programmable memory, registers, and the like. The storage medium is located in the memory 601. The processor 602 reads the information in the memory 601, and in combination with the hardware thereof, completes the functions required to be executed by the units included in the IPC 600 in embodiments of the present disclosure, or performs the method for detecting poor welding in welding in method embodiments of the present disclosure.

The communication interface 603 implements communication between the IPC 600 and other devices or communication networks by using, for example, but not limited to, a transceiver device such as a transceiver. For example, the data may be obtained through the communication interface 603.

The bus 604 may include a connection path for transferring information between various components (e.g., the memory 601, the processor 602, and the communications interface 603) of the IPC 600.

It may be noted that although the IPC 600 illustrated in FIG. 6 only shows a memory, a processor, and a communication interface, in a specific implementation process, those skilled in the art may understand that the IPC 600 further includes other components necessary for implementing normal running. Meanwhile, according to specific requirements, those skilled in the art may understand that the IPC 600 may further include hardware components for implementing other additional functions. In addition, those skilled in the art may understand that, the IPC 600 may also only include components necessary for implementing the embodiments of the present disclosure, and not necessarily include all components illustrated in FIG. 6.

A chip is further provided in embodiments of the present disclosure. The chip includes a processor and a data interface. The processor reads instructions stored in the memory through the data interface to implement the method for detecting poor welding in welding.

Optionally, as an implementation, the chip may further include a memory storing instructions. The processor is configured to execute the instructions stored in the memory. When the instructions are executed, the processor is configured to execute the method for detecting poor welding in welding.

A computer-readable storage medium is further provided in embodiments of the present disclosure. The computer-readable storage medium stores instructions which, when executed by a computer or a processor, cause the computer or the processor to execute one or more operations in the above method.

A computer program product is further provided in embodiments of the present disclosure. The computer program product includes instructions which, when executed by a computer or a processor, cause the computer or the processor to execute one or more operations in the above method.

Those skilled in the art can appreciate that functions described with reference to various illustrative logical blocks, modules, and algorithm operations disclosed and described herein may be implemented by hardware, software, firmware, or any combination thereof. If implemented by software, the functions described with reference to the illustrative logical blocks, modules, and operations may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communication medium that facilitates transmission of a computer program from one place to another (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in the present disclosure. A computer program product may include a computer-readable medium.

By way of example and not limitation, such computer-readable storage media may include a RAM, a ROM, an electrically erasable programmable read only memory (EEPROM), a compact disc read only memory (CD-ROM) or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (DSL), or a wireless technology such as infrared, radio, or microwave, the coaxial cable, the optical fiber, the twisted pair, the DSL, or the wireless technology such as infrared, radio, or microwave is included in a definition of the medium. However, it may be understood that the computer-readable storage medium and the data storage medium do not include connections, carriers, signals, or other transitory media, but actually mean non-transitory tangible storage media. Disks and discs used in this specification include a compact disc (CD), a laser disc, an optical disc, a digital versatile disc (digital video disk, DVD), and a Blu-ray disc. The disks usually reproduce data magnetically, whereas the discs reproduce data optically by using lasers. Combinations of the above should also be included within the scope of the computer-readable medium.

An instruction may be executed by one or more processors such as one or more DSP, a general microprocessor, an ASIC, a FPGA, or an equivalent integrated circuit or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and operations described in this specification may be provided within dedicated hardware and/or software modules configured for encoding and decoding, or may be incorporated into a combined codec. In addition, the technologies may be completely implemented in one or more circuits or logic elements.

The technologies in the present disclosure may be implemented in various apparatuses or devices, including a wireless handset, an integrated circuit (IC), or a set of ICs (for example, a chip set). Various components, modules, or units are described in the present disclosure to emphasize functional aspects of apparatuses configured to perform the disclosed techniques, but do not necessarily require realization by different hardware units. Actually, as described above, various units may be combined into a code hardware unit in combination with appropriate software and/or firmware, or may be provided by interoperable hardware units (including the one or more processors described above).

Those skilled in the art can clearly understood that, for convenience and brevity of description, specific operation processes of the system, apparatus, and unit described above may refer to specific descriptions of corresponding operation processes in the method embodiments described above, which will not be repeated herein.

It may be understood that in the description of the present disclosure, unless otherwise specified, "/" indicates that front-to-back associated objects are in an "or" relationship, for example, A/B may indicate A or B, where A and B each may be singular or plural. In addition, in the description of the present disclosure, unless otherwise specified, "multiple" means two or more than two. "At least one of the following items (piece)" or a similar expression thereof means any combination of these items, including a singular item (piece) or any combination of plural items (pieces). For example, at least one item (piece) of *a*, *b,* or *c* indicates: *a, b, c, a* and *b, a* and *c, b* and *c*, or *a, b,* and *c*, where *a, b,* and *c* each are singular or plural. In addition, to clearly describe the technical solutions in at least one embodiment, terms such as "first" and "second" are used in the embodiments of the present disclosure to distinguish between same items or similar items that provide basically same functions or purposes. Those skilled in the art understands that the terms such as "first" and "second" do not limit a quantity and an execution sequence, and the terms such as "first" and "second" do not indicate a definite difference. Meanwhile, the term such as "example" or "for example" in at least one embodiment is used to represent giving an example, an illustration, or a description. Any embodiment or design solution described as an "example" or "for example" in the embodiments of the present disclosure may not be explained as being more preferred or having more advantages than other embodiments or design solutions. Exactly, use of the terms such as "example" or "for example" is intended to present a related concept in a specific manner for ease of understanding.

In several embodiments provided in present disclosure, it may be understood that the disclosed system, apparatus, and method may be implemented in another manner. For example, division into the units is merely logical function division and may be another division in actual implementation. For example, multiple units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on multiple network units. Some or all of the units may be selected based on actual requirements to achieve the objectives of the solutions of embodiments.

All or some of the foregoing embodiments may be implemented using software, hardware, firmware, or any combination thereof. When software is used to implement the embodiments, all or some of the embodiments may be implemented in a form of a computer program product. The computer program product includes one or more computer instructions. When the one or more computer program instructions are loaded and executed on a computer, the procedures or functions according to embodiments of present disclosure are all or partially generated. The computer may be a general-purpose computer, a dedicated computer, a computer network, or other programmable apparatuses. The one or more computer instructions may be stored in a computer-readable storage medium, or transmitted by using the computer-readable storage medium. The one or more computer instructions may be transmitted from a website, computer, server, or data center to another website, computer, server, or data center in a wired (e.g., a coaxial cable, an optical fiber, or a DSL) or wireless (e.g., infrared, radio, or microwave) manner. The computer-readable storage medium may be any usable medium accessible by a computer, or a data storage device, such as a server or a data center, integrating one or more usable media. The usable medium may be a ROM, a RAM, or a magnetic medium, such as, a floppy disk, a hard disk, a magnetic tape, a magnetic disk, or an optical medium, such as, a DVD, or a semiconductor medium, such as, a solid state drive (SSD).

The foregoing descriptions are merely implementations of embodiments of the present disclosure, but are not intended to limit the protection scope of embodiments of the present disclosure. Any variation or replacement within the technical scope disclosed in embodiments of the present disclosure shall fall within the protection scope of embodiments of the present disclosure. Therefore, the protection scope of embodiments of the present disclosure shall be subject to the protection scope of the claims.

## Claims

1. A method for detecting poor welding in welding, comprising:
obtaining (S201) an electrical signal corresponding to an infrared light signal generated by a target weld in a first period, wherein a start moment of the first period is not earlier than a moment at which the complete target weld is formed, and the target weld is formed by laser machining a sheet material; and
determining (S202) whether the target weld has the poor welding according to the electrical signal corresponding to the infrared light signal.

2. The method of claim 1, wherein determining whether the target weld has the poor welding according to the electrical signal corresponding to the infrared light signal comprises:
determining whether the target weld has the poor welding according to an electrical-signal-curve corresponding to the infrared light signal.

3. The method of claim 2, wherein determining whether the target weld has the poor welding according to the electrical-signal-curve corresponding to the infrared light signal comprises:
obtaining an upper limit-value of the infrared light signal according to the electrical-signal-curve corresponding to the infrared light signal and an upper base edge-line of the infrared light signal; and
determining whether the target weld has the poor welding according to the upper limit-value of the infrared light signal, wherein the target weld is determined to have the poor welding, in response to an amplitude of the electrical-signal-curve corresponding to the infrared light signal being greater than an amplitude of the upper base edge-line of the infrared light signal and the upper limit-value of the infrared light signal being greater than an upper limit-threshold.

4. The method of claim 3, wherein the electrical-signal-curve corresponding to the infrared light signal comprises a plurality of first points, the upper base edge-line comprises a plurality of third points, the plurality of first points are corresponding to the plurality of third points in time, and obtaining the upper limit-value of the infrared light signal according to the electrical-signal-curve corresponding to the infrared light signal and the upper base edge-line of the infrared light signal comprises:
obtaining a plurality of differences by calculating a difference between an amplitude represented by each of the plurality of first points and an amplitude represented by one of the plurality of third points corresponding to a first point in time; and
determining a maximum of the plurality of differences as the upper limit-value of the infrared light signal;
wherein a base midline of the infrared light signal comprises a plurality of second points, the plurality of second points are corresponding to the plurality of third points in time, and the method further comprises:
obtaining a plurality of differences by calculating a difference between an amplitude represented by each of the plurality of third points and an amplitude represented by one of the plurality of second points corresponding to a third point in time; and
determining a maximum of the plurality of differences as the upper limit-threshold.

5. The method of claim 2, wherein determining whether the target weld has the poor welding according to the electrical-signal-curve corresponding to the infrared light signal comprises:
obtaining an upper local-area of the infrared light signal according to the electrical-signal-curve corresponding to the infrared light signal and an upper base edge-line of the infrared light signal, wherein the upper local-area of the infrared light signal is an area of a region between the upper base edge-line and a part of the electrical-signal-curve corresponding to the infrared light signal whose amplitude is greater than an amplitude of the upper base edge-line; and
determining whether the target weld has the poor welding according to the upper local-area of the infrared light signal, wherein the target weld is determined to have the poor welding , in response to an amplitude of the electrical-signal-curve corresponding to the infrared light signal being greater than the amplitude of the upper base edge-line of the infrared light signal and the upper local-area of the infrared light signal being larger than an upper local-area threshold.

6. The method of claim 5, wherein obtaining the upper local-area of the infrared light signal according to the electrical-signal-curve corresponding to the infrared light signal and the upper base edge-line of the infrared light signal comprises:
determining a first moment and a second moment, wherein the first moment is the start moment of the first period, and the second moment is a moment at which the electrical-signal-curve corresponding to the infrared light signal intersects with the upper base edge-line;
calculating a first integral area under the electrical-signal-curve corresponding to the infrared light signal between the first moment and the second moment, and calculating a second integral area under the upper base edge-line between the first moment and the second moment; and
determining a difference between the first integral area and the second integral area as the upper local-area of the infrared light signal.

7. The method of claim 5 or 6, wherein the upper base edge-line of the infrared light signal comprises a plurality of third points, and a base midline of the infrared light signal comprises a plurality of second points, the plurality of third points are corresponding to the plurality of second points in time, and the method further comprises:
determining a start third-point and a terminal third-point from the upper base edge-line of the infrared light signal, wherein the start third-point is one of the plurality of third points corresponding to a start second-point in time, the terminal third-point is one of the plurality of third points that represents an amplitude identical to an amplitude represented by a corresponding second point in time, and the start second-point is a first second-point in the base midline of the infrared light signal;
calculating a third integral area under a part of the upper base edge-line of the infrared light signal between the start third-point and the terminal third-point, and calculating a fourth integral area under a part of the base midline of the infrared light signal between one of the plurality of second points corresponding to the start third-point in time and one of the plurality of second points corresponding to the terminal third-point in time; and
determining half of a difference between the third integral area and the fourth integral area as the upper local-area threshold.

8. The method of claim 2, wherein determining whether the target weld has the poor welding according to the electrical-signal-curve corresponding to the infrared light signal comprises:
determining a slope of the infrared light signal according to the electrical-signal-curve corresponding to the infrared light signal; and
determining whether the target weld has the poor welding according to the slope of the infrared light signal, wherein the target weld is determined to have the poor welding, in response to the slope of the infrared light signal being greater than a slope threshold.

9. The method of claim 8, wherein the electrical-signal-curve corresponding to the infrared light signal comprises a plurality of first points, and determining the slope of the infrared light signal according to the electrical-signal-curve corresponding to the infrared light signal comprises:
determining a start first-point and a terminal first-point from the plurality of first points, wherein an amplitude represented by the start first-point is collected at the start moment, and the terminal first-point is one of the plurality of first points that represents an amplitude of 0;
determining a collection moment of the start first-point and a collection moment of the terminal first-point; and
calculating a first difference between an amplitude represented by the start first-point and an amplitude represented by the terminal first-point, calculating a second difference between the collection moment of the start first-point and the collection moment of the terminal first-point, and calculating a ratio of the first difference to the second difference, the ratio being the slope of the infrared light signal;
wherein a base midline of the infrared light signal comprises a plurality of second points, the plurality of first points are corresponding to the plurality of second points in time, and the method further comprises:
determining a start second-point and a terminal second-point from the plurality of second points, wherein the start second-point is one of the plurality of second points in the base midline of the infrared light signal corresponding to the start first-point in time, and the terminal second-point is one of the plurality of second points in the base midline of the infrared light signal corresponding to the terminal first-point in time; and
calculating a third difference between an amplitude represented by the start second-point and an amplitude represented by the terminal second-point, calculating a ratio of the third difference to the second difference, and determining twice an absolute value of the ratio as the slope threshold.

10. The method of claim 2, wherein the electrical-signal-curve corresponding to the infrared light signal comprises a plurality of first points, and determining whether the target weld has the poor welding according to the electrical-signal-curve corresponding to the infrared light signal comprises:
calculating an amplitude average-value of the infrared light signal according to the plurality of first points, wherein the amplitude average-value of the of the infrared light signal is an average value of amplitudes represented by the plurality of first points; and
determining whether the target weld has the poor welding according to the amplitude average-value of the infrared light signal, wherein the target weld is determined to have the poor welding, in response to the amplitude average-value of the infrared light signal being greater than an average-value threshold;
wherein a base midline of the infrared light signal comprises a plurality of second points, the method further comprising:
calculating an average value of amplitudes represented by the plurality of second points, and determining twice the average value as the average-value threshold.

11. The method of claim 2, wherein determining whether the target weld has the poor welding according to the electrical-signal-curve corresponding to the infrared light signal comprises:
obtaining an average offset of the infrared light signal according to the electrical-signal-curve corresponding to the infrared light signal and a base midline of the infrared light signal; and
determining whether the target weld has the poor welding according to the average offset of the infrared light signal, wherein the target weld is determined to have the poor welding, in response to an amplitude of the electrical-signal-curve corresponding to the infrared light signal being greater than an amplitude of an upper base edge-line of the infrared light signal and the average offset of the infrared light signal being out of a preset offset range.

12. The method of claim 11, wherein the electrical-signal-curve corresponding to the infrared light signal comprises a plurality of first points, the base midline comprises a plurality of second points, the plurality of first points are corresponding to the plurality of second points in time, and obtaining the average offset of the infrared light signal according to the electrical-signal-curve corresponding to the infrared light signal and the base midline of the infrared light signal comprises:
obtaining a plurality of absolute values of differences by calculating an absolute value of a difference between an amplitude represented by each of the plurality of first points and an amplitude represented by one of the plurality of second points corresponding to a first point in time; and
obtaining the average offset of the infrared light signal by summing the plurality of absolute values of the differences and averaging a sum result;
wherein the preset offset range satisfies: [*-µ-4σ*, *µ+*4*σ*]*,* wherein *µ* is an average value of average offsets of electrical signals corresponding to infrared light signals generated in a second period by a plurality of complete welds having no poor welding obtained in a historical laser machining process, and *σ* is a standard deviation of the average offsets of the electrical signals corresponding to the infrared light signals generated in the second period by the plurality of complete welds having no poor welding obtained in the historical laser machining process; and a start moment of the second period is not earlier than a moment at which any one of the plurality of complete welds having no poor welding is formed.

13. The method of any one of claims 1 to 12, further comprising:
obtaining (S203) position information of the target weld, in response to the target weld being determined to have the poor welding; and
transmitting the position information of the target weld to a laser welding system, to make the laser welding system re-machine the target weld according to the position information of the target weld.

14. A laser machining control system, comprising a laser welding system, a multi-optical sensor module (4), a signal processing module (6), and an industrial personal computer, IPC (8), wherein the IPC (8) is configured to perform the method of any one of claims 1 to 13.

15. A computer-readable storage medium, configured to store computer programs, wherein the computer programs are executed by a processor to implement the method of any one of claims 1 to 13.
